# EUROPEAN PATENT APPLICATION

(11) **EP 4 436 137 A1**
(43) Date of publication of application: **25.09.2024**
(21) Application number: 24163854.3
(22) Date of filing: 15.03.2024
(51) Int. Cl.: H04L 67/1001, H04L 9/32

(54) **RELIABLE TIME INFORMATION FOR OFFLINE OVER THE AIR UPDATES**

(30) Priority: 16.03.2023 IL 30143323
(71) Applicant: Red Bend Ltd., 4501307 Hod Ha'Sharon (IL)
(72) Inventor: BIEDRON, Marcin, 94-403 Lodz (PL)
(74) Representative: Rummler, Felix

(57) **Abstract**

A vehicle comprising at least one short-range digital communication network interface (local-network interface) and at least one hardware processor is disclosed. The hardware processor is configured to respond to a request for a verified local-time value by receiving at least one local-time value from at least one other hardware processor via the local-network interface when failing to access a reliable time source. The hardware processor then computes a semi-reliable local-time value using the at least one local-time value and executes at least one secure operation subject to an outcome of at least one test applied to the semi-reliable local-time value.

## Description

### BACKGROUND

Some embodiments described in the present disclosure relate to secure software operations and, more specifically, but not exclusively, to digital data updates in a vehicle.

As used herewithin, the term "connected vehicle" refers to a vehicle connected to a wireless or cellular digital communication network. In addition, as used herewithin, the term over the air (OTA) update (or distribution) refers to the ability to distribute digital data to a plurality of target devices over a wireless or cellular digital communication network. Such digital data includes, but is not limited to, applications, services and configurations. An application may be a set of computer instructions, for example a firmware image or a software application. An example of a configuration is an encryption key. OTA distribution is used for a variety of target devices, including mobile phones and Internet-of-Things (IoT) devices, for example a smoke detector, a smart home speaker, and a light bulb controller. There is increasing use of OTA update by mobile operators and telecommunication third parties to configure data updates in SIM cards, distribute system updates and access services, such as wireless access protocol (WAP) or multimedia messaging service (MMS).

In the automotive industry, OTA update may be used to update one or more of a connected vehicle's systems, for example the vehicle's navigation systems, for example in order to upgrade the vehicle with new features or to fix faulty vehicle software by remote. In addition, digital data may be updated in a vehicle that is not a connected vehicle, for example using a Universal Serial Bus (USB) memory device or another device connected to the vehicle via a USB connection.

It is common practice for digital data update procedures, for example OTA update procedures, to include steps that reduce the risk of installing harmful digital data on a device. Digital data may be harmful unintentionally, for example installing a version of the digital data that is incompatible with the device. Digital data may be intentionally harmful, for example when the device is a target of a cyber-attack. Some examples of a cyber-attack include gaining remote control access to a vehicle's system, for example steering, acceleration, or brake control, and mining a connected vehicle for personal information about an owner or driver. Accurate time information is a common foundation of many security mechanisms.

### SUMMARY

It is an object of some embodiments described in the present disclosure to provide a system and a method for executing one or more secure operations when reliable time information is not available. In such embodiments, a local-time value received via a short-range digital communication network interface is used to compute a semi-reliable local-time value, and the one or more secure operations are executed subject to an outcome of one or more tests applied to the semi-reliable local-time value. Applying the one or more tests to the semi-reliable local-time value increases accuracy of a determination whether or not to execute the one or more secure operations, thus increasing the system's security compared to using an untested local time value and increases usability of the system by reducing an amount of times the system declines executing the one or more secure operations compared to using only verified time information. Using a short-range digital communication network interface to receive a local-time value reduces the likelihood of tampering with the local-time value from a location that is remote to the system, increasing accuracy of the computed semi-reliable local-time value and thus increasing usability of the system by reducing an amount of times the at least one hardware processor declines executing the one or more secure operations.

The foregoing and other objects are achieved by the features of the independent claims. Further implementation forms are apparent from the dependent claims, the description and the figures.

According to a first aspect, a vehicle comprises: at least one short-range digital communication network interface (local-network interface); and at least one hardware processor, connected to the local-network interface, and configured for: in response to a request for a verified local-time value: subject to failing to access a reliable time source: receiving at least one local-time value from at least one other hardware processor by using the local-network interface to access the at least one other hardware processor; and computing a semi-reliable local-time value using the at least one local-time value; and executing at least one secure operation subject to an outcome of at least one test applied to the semi-reliable local-time value.

According to a second aspect, a method for a hardware processor in a vehicle comprises: in response to a request for a verified local-time value: subject to failing to access a reliable time source: receiving at least one local-time value from at least one other hardware processor by using at least one short-range digital communication network to access the at least one other hardware processor; and computing a semi-reliable local-time value using the at least one local-time value; and executing at least one secure operation subject to an outcome of at least one test applied to the semi-reliable local-time value.

According to a third aspect, a software program product for a vehicle comprises: a non-transitory computer readable storage medium; and program instructions for: in response to a request for a verified local-time value: subject to failing to access a reliable time source: receiving at least one local-time value from at least one other hardware processor by using at least one short-range digital communication network to access the at least one other hardware processor; and computing a semi-reliable local-time value using the at least one local-time value; and executing at least one secure operation subject to an outcome of at least one test applied to the semi-reliable local-time value; wherein the program instructions are executed by at least one computerized processor from the non-transitory computer readable storage medium.

With reference to the first and second aspects, in a first possible implementation of the first and second aspects the local-network interface comprises at least one of: a wireless digital communication network interface, a wired local area network interface, a near-field communication (NFC) interface, and a bus of the vehicle.

With reference to the first and second aspects, in a second possible implementation of the first and second aspects the at least one other hardware processor comprises at least one vehicle hardware processor installed in the vehicle and connected to the at least one hardware processor via the local-network interface. Receiving the at least one local-time value from a vehicle hardware processor installed in the vehicle increases the likelihood that the at least one local-time value is a correct time of the vehicle, thus increasing accuracy of the computed semi-reliable local-time value compared to receiving a time value from a hardware processor outside the vehicle.

With reference to the first and second aspects, in a third possible implementation of the first and second aspects the at least one hardware processor comprises at least one device hardware processor installed in at least one other device connected to the at least one hardware processor via the local-network interface. Receiving the at least one local-time value from a hardware processor installed in another device increases a likelihood of a local-time value being available compared to relying only of hardware processor installed in the vehicle, which may not have a local clock. In addition, using a local-time value received from a hardware processor installed in another device increases accuracy of the local-time value compared to using a value received from a hardware processor installed in the vehicle, for example when the vehicle has not been started in time long enough from batteries of the vehicle to be drained, preventing maintenance of time keeping values on a hardware processor of the vehicle. Optionally, the at least one other device comprises at least one of: a mobile device; a maintenance device, connected to the vehicle for the purpose of performing at least one maintenance operation on the vehicle; and a road infrastructure component.

With reference to the first and second aspects, in a fourth possible implementation of the first and second aspects the at least one hardware processor is further configured for sending the at least one other hardware processor a request for the at least one local-time value. Optionally, the at least one other hardware processor retrieves the at least one local-time value from a local clock of the at least one other hardware processor. Retrieving the at least one local-time value from a local clock increases the likelihood of accessing a local-time value compared to relying on another hardware processor, for example when the at least one hardware processor is not connected to another hardware processor, thus reduces an amount of time the at least one hardware processor declines executing the one or more secure operations due to lack of reliable time information. Optionally, the at least one other hardware processor retrieves the at least one local-time value by accessing at least one other reliable time source. Accessing another reliable time source increases accuracy of the local-time value. Accessing the other reliable time source by the at least one other hardware processor increases the likelihood of retrieving a reliable time value compared to accessing a reliable time source by the at least one hardware only, for example when the at least one hardware is connected to one or more short-range digital communication networks but is not connected to a wide area network. Optionally, computing the semi-reliable local-time value comprises using an uptime value indicative of an amount of time since an initialization of the at least one hardware processor. Optionally, computing the semi-reliable local-time value comprises accessing a monotonic counter of the vehicle. Using an uptime value indicative of an amount of time since an initialization of the at least one hardware processor, and additionally or alternatively a monotonic counter of the vehicle, increases accuracy of semi-reliable local-time value by facilitating considering an amount of time the at least one hardware processor has been operating and additionally or alternatively an amount of time between other operations.

With reference to the first and second aspects, in a fifth possible implementation of the first and second aspects computing the semi-reliable local-time value comprises: computing a set of similar local-time values selected from the at least one local-time value, such that a difference between each two of the set of similar local-time values is less than a similarity threshold value; and identifying that a relation between an amount of similar values of the set of similar local-time values and an amount of values in the at least one local-time value exceeds a confidence value. Computing the semi-reliable local-time using a set of similar local-time values that consists of a large enough amount of local-time values from the at least one local-time value increases accuracy of the semi-reliable local-time compared to using a set of semi-reliable local-time values that are significantly different from each other.

With reference to the first and second aspects, in a sixth possible implementation of the first and second aspects applying the at least one test to the semi-reliable local-time value comprises comparing the semi-reliable local-time value to a timestamp value. Comparing the semi-reliable local-time value to a timestamp value allows identifying a local-time that is unreasonable, which may be an indication of a security breach. Some examples of an unreasonable local-time value include, but are not limited to, a local-time value that is earlier than the timestamp when the timestamp is indicative of a time of executing an identified operation, and a local-time value indicative of an attempt to execute the one or more secure operations a significantly long time after a previous execution of the identified operation. Optionally, the at least one hardware processor is further configured for updating the timestamp value with the semi-reliable local-time value. Optionally, the at least one hardware processor is further configured for resetting at least one timer of the at least one hardware processor. Updating the timestamp and additionally or alternatively resetting one or more timers, for example according to an outcome of applying the one or more tests to the semi-reliable local-time value, reduces an amount of times a future application of the at least one test to another time value and the time stamp will fail, thus increasing usability of the vehicle, or other system implemented according to the present disclosure.

With reference to the first and second aspects, in a seventh possible implementation of the first and second aspects executing the at least one secure operation comprises providing the semi-reliable local-time value to at least one additional hardware processor. Optionally, the at least one secure operation comprises at least one of: scheduling downloading a digital file; sending a plurality of statistical values to at least one remote hardware processor; copying a file from a Universal Serial Bus (USB) connected memory device; receiving a file from a USB connected device; verifying a signature of a file; and validating an expiration time of a certificate.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which embodiments pertain. Although methods and materials similar or equivalent to those described herein can be used in the practice or testing of embodiments, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWING(S)

Some embodiments are herein described, by way of example only, with reference to the accompanying drawings. With specific reference now to the drawings in detail, it is stressed that the particulars shown are by way of example and for purposes of illustrative discussion of embodiments. In this regard, the description taken with the drawings makes apparent to those skilled in the art how embodiments may be practiced.

In the drawings:
FIG. 1 is a schematic block diagram of an exemplary system, according to some embodiments;
FIG. 2 is a flowchart schematically representing an optional flow of operations, according to some embodiments; and
FIG. 3 is a flowchart schematically representing an optional flow of operations for computing a semi-reliable local-time value, according to some embodiments.

### DETAILED DESCRIPTION

The following description uses OTA update in a connected vehicle as an example of a procedure that includes one or more secure operations. However, the systems and methods described below may be used for OTA update of other devices, for example an IoT device. Optionally, the connected vehicle is an electrical vehicle, having one or more batteries providing at least some of the power required to operate the vehicle. Furthermore, the systems and methods described below may be used for executing one or more secure operations included in a method for updating digital data in a vehicle that is not an OTA update method, for example a method that uses a USB connection or a USB memory device. Additionally furthermore, the systems and methods described below may be used for executing one or more secure operations included in a procedure other than digital data update, for example a financial transaction, an industrial production process or a maintenance operation on a vehicle.

Some security methods use time information, for example to compare a time value that is local to a device (local-time value) with a reference time value. For example, in an OTA update procedure a local-time may be the current time on the device, which may be compared to a timestamp stored on the device, for example in a configuration file of the device. In another example, a local-time value may be an amount of time that has elapsed since a device was initialized.

Some hardware processors on a device have access to one or more time values on the device, for example a locally maintained clock or an uptime value indicative of an amount of time since an initialization of a hardware processor. However, some hardware processors do not have direct access to a time value and need to communicate with another hardware processor to obtain time information. To prevent circumventing security measures by tampering with time values sent to the hardware processor, it is common practice for a hardware processor to obtain a local-time value from a reliable time source, for example from a secure time server using network time protocol (NTP) or from a server providing digital data for an OTA update. Some other examples of a reliable time source include a Global Navigation Satellite System, such as the Global Positioning System (GPS), the Galileo system and the GLONASS system. When a hardware processor is required to provide verified time information for an operation to be executed, the hardware processor must be able to connect to a reliable time server, for example via a digital communication network. In such solutions, when the hardware processor cannot access the time server the operation cannot be executed.

According to some existing practices, when executing a procedure that includes a plurality of secure operations, when the hardware processor cannot communicate with a reliable time server no secure operations are executed and the entire procedure is stopped or suspended. In some procedures that include a plurality of secure operations, it may be that some of the plurality of secure operations are indeed time critical and require time information that is verified to be accurate. For example, some irreversible configuration operations on a vehicle may require verified time information from a hardware processor in the vehicle, for example replacing a firmware image. However, some procedures include one or more secure operations that are not time critical and are safe to execute with time information that is assumed correct but cannot be verified by a reliable time source. For example, while instructing to change a firmware image may require receiving verified time information from the hardware processor, the hardware processor may be allowed to download the firmware image from a file server to local storage on the device so long as the device's local time is not too different from time on the file server, i.e. a difference between a time value on the file server and a local-time value indicative of the current time on the device does not exceed a threshold time difference value. Another example is retrieving statistical data from a vehicle that may be allowed when communicating with a diagnostic device directly connected to the vehicle, even when the vehicle is not connected to a wide area network such as the Internet and has no access to a secure time server. For such non-time-critical secure operations, it may be sufficient to use a local-time value that is likely to be correct.

A possible solution is for the hardware processor to communicate with one or more other hardware processors that have access to time information. Communicating with another hardware processor via a digital communication network is vulnerable to tampering, where a malicious entity may provide the hardware processor with corrupt time information via the digital communication network. The risk of tampering increases as the network is wider, where a risk of tampering from a remote hardware processor is greater than a risk of tampering from another hardware processor that is in close proximity to the hardware processor.

To increase reliability of time information received from a non-reliable time source, the present disclosure proposes, in some embodiments described herewithin, communicating with one or more other hardware processors using a short-range digital communication network, for example a wireless network or a wired local area network (LAN). Other examples of a short-range digital communication network include, but are not limited to, near-field communication (NFC) and a bus connecting the hardware processor to the one or more other hardware processors. Using time information received from one or more nearby hardware processors via a short-range digital communication network reduces a likelihood of the time information being corrupt.

For example, a management application for managing a vehicle may be executed on a mobile device connected to a hardware processor of the vehicle via a wireless network, for example Wi-Fi, Bluetooth or Zigbee. Optionally, the hardware processor and the mobile device execute an authentication procedure to establish communication therebetween. In this example, the hardware processor may receive one or more local-time values from the mobile device via the wireless network. As the hardware processor and the mobile device executed the authentication procedure, the one or more local-time values may be assumed correct even though they are not validated by the hardware processor with a reliable time source. In another example, the hardware processor may receive the one or more local-time values from another hardware processor, electrically coupled to the hardware processor. In this example, remote tampering via the electrical coupling is unlikely and therefor the one or more local-time values are assumed correct. Other examples of a bus include a bus that connects between the hardware processor and one or more other components in the vehicle, for example a local clock.

Optionally, the one or more other hardware processors have access to a reliable time source and retrieve the one or more local-time values from the reliable time source. For example, the one or more other hardware processors may be installed on a mobile device connected to the device. In another example, when the device is an electrical vehicle, the one or more other processors may be installed in a road infrastructure component, for example a traffic sign. Optionally, the electrical vehicle connects to the road infrastructure component via a wireless network, optionally when passing close to the road infrastructure component. Receiving the one or more local-time values from a road infrastructure component reduces an amount of times that the one or more secure operations cannot be executed, thus increasing reliability of a process including the one or more secure operations, for example increases reliability of a digital data update process.

Optionally, the hardware processor uses the one or more local-time values to compute a semi-reliable local-time value. Optionally, one or more tests are applied to the semi-reliable local-time value. Optionally, the hardware processor executes the one or more secure operations subject to an outcome of applying one or more tests to the semi-reliable local-time value. Executing the one or more secure operations according to the semi-reliable local-time value increases usability of the device by enabling execution of the one or more secure operations when the hardware processor cannot access a reliable time source, reducing dependency of the device's operation on access to the reliable time source. In addition, executing the one or more secure operations according to the semi-reliable local-time value increases reliability of a software program executed by the hardware processor and comprising the one or more secure operations by reducing an amount of times the hardware processor cannot execute the one or more secure operation.

In some embodiments, computing the semi-reliable local-time value comprises selecting from the one or more local-time values a set of similar local-time values, such that a difference between each two of the set of similar local-time values is less than a similarity threshold value. The similarity threshold value may be measured in hours, for example 2 hours, 5, hours, and 15 hours. Optionally, the similarity threshold value is measured in minutes, for example 3 minutes, 10 minutes and 45 minutes. Optionally, the similarity threshold value is measured in seconds or milliseconds. Optionally, computing the semi-reliable local-time comprises identifying that a sufficient amount of local-time values are similar, i.e. that a relation between an amount of similar values of the set of similar local-time values and an amount of values in the one or more local-time values exceeds a confidence value. For example, computing the semi-reliable local-time value may comprise identifying that the set of similar local-time values includes at least 80% of the one or more local-time values. Other examples of a confidence value include 25%, 30%, 50% and 75%. Computing the semi-reliable local-time value according to a set of similar local-time values consisting of a sufficient amount of values increases accuracy of the semi-reliable local-time value, and thus increases reliability of executing the one or more secure operations.

Before explaining at least one embodiment in detail, it is to be understood that embodiments are not necessarily limited in its application to the details of construction and the arrangement of the components and/or methods set forth in the following description and/or illustrated in the drawings and/or the Examples. Implementations described herein are capable of other embodiments or of being practiced or carried out in various ways.

Embodiments may be a system, a method, and/or a computer program product. The computer program product may include a computer readable storage medium (or media) having computer readable program instructions thereon for causing a processor to carry out aspects of the embodiments.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of embodiments may be assembler instructions, instruction-set-architecture (ISA) instructions, machine instructions, machine dependent instructions, microcode, firmware instructions, state-setting data, or either source code or object code, natively compiled or compiled just-in-time (JIT), written in any combination of one or more programming languages, including an object oriented programming language such as Smalltalk, C++, Java, Object-Oriented Fortran or the like, an interpreted programming language such as JavaScript, Python or the like, and conventional procedural programming languages, such as the "C" programming language, Fortran, or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), a coarse-grained reconfigurable architecture (CGRA), or programmable logic arrays (PLA) may execute the computer readable program instructions by utilizing state information of the computer readable program instructions to personalize the electronic circuitry, in order to perform aspects of embodiments.

Aspects of embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

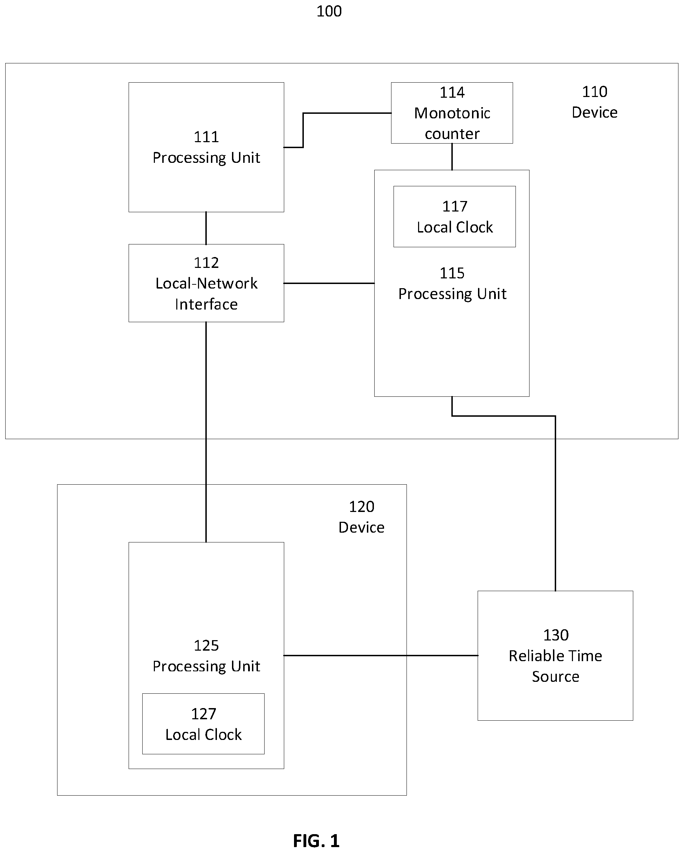

Reference is now made to FIG. 1, showing a schematic block diagram of an exemplary system 100, according to some embodiments. In such embodiments, device 110 comprises at least one hardware processor 111, connected to at least one short-range digital communication network interface 112. Optionally, device 110 is a vehicle, optionally an electrical vehicle. Optionally, device 110 is a connected vehicle. Optionally, device 110 is a management component of an industrial production process. Optionally, system 100 provides one or more financial services and device 110 is configured for performing one or more financial transactions.

For brevity, henceforth the term "local-network interface" is used to mean "at least one short-range digital communication network interface" and the terms are used interchangeably. In addition, for brevity, henceforth the term "processing unit" is used to mean "at least one hardware processor" and the terms are used interchangeably.

Optionally, local-network interface 112 comprises a wireless digital communication network interface. Some examples of a wireless digital communication network interface include a Wi-Fi interface, a Bluetooth interface and a Zigbee interface. Optionally, local-network interface 112 comprises a wired LAN interface, for example an interface to an Ethernet network. Another example of a wired LAN interface is a Universal Serial Bus (USB) interface. Optionally, local-network interface 112 comprises an NFC interface. Optionally, local-network interface 112 comprises a bus of device 110. For example, when device 110 is a vehicle, the bus may be a bus of the vehicle. Optionally, local-network interface 112 connects processing unit 111 with one or more components of device 110, for example other processing unit 115 and additionally or alternatively monotonic counter 114. When device 110 is a vehicle, for example an electrical vehicle, other processing unit115 may be a vehicle processing unit installed in the vehicle. Optionally, other processing unit 115 is connected to processing unit 111 via a wireless digital communication network using local-network interface 112. Optionally, local-network interface 112 comprises a bus connecting other processing unit 115 to processing unit 111. Optionally, processing unit 111 is electrically coupled to other processing unit 115.

Optionally, other processing unit 115 comprises a local clock 117. Optionally, other processing unit 115 connects to one or more reliable time source 130. Optionally, one or more reliable time source 130 is a network time source, for example a secure NTP server.

Optionally, device 110 is connected to one or more other device 120. Optionally, one or more other device 120 optionally comprises a mobile device, for example a mobile phone or a tablet. Optionally the mobile device executes a companion application, for example providing a graphical user interface to one or more functionalities of device 110. Optionally, one or more other device 120 comprises a maintenance device. Optionally, the maintenance device is connected to device 110 for performing one or more maintenance operations on device 110. For example, when device 110 is a vehicle, optionally the maintenance device is connected to device 110 to perform one or more vehicle maintenance operations, some examples including collecting vehicle statistics, executing vehicle diagnostics and updating at least some of the vehicle's digital data. Optionally, one or more other device 120 comprises a road infrastructure component, for example a traffic sign or a road barrier. Optionally, when device 110 is an electrical vehicle, device 110 connects to the road infrastructure component when passing close enough thereto, for example when a distance between device 110 and the road infrastructure component is less than a threshold distance. Optionally, one or more device 120 comprise other processing unit 125.

Optionally, device 110 connected to one or more other device 120 comprises processing unit 111 connected to other processing unit 125. Optionally, processing unit 111 is connected to other processing unit 125 via Wi-Fi. Optionally, processing unit 111 is connected to other processing unit 125 via Bluetooth. Optionally, processing unit 111 is connected to other processing unit 125 via USB.

Optionally, other processing unit 125 comprises a local clock 127. Optionally, other processing unit 125 connects to one or more reliable time source 130. Optionally, device 120 comprises one or more reliable time source 130.

Optionally, processing unit 111 is connected to one or more additional processing units (not shown). Optionally, the one or more additional processing units are installed in device 110.

In some embodiments described herewithin, to perform one or more secure operations system 100 implements the following optional method.

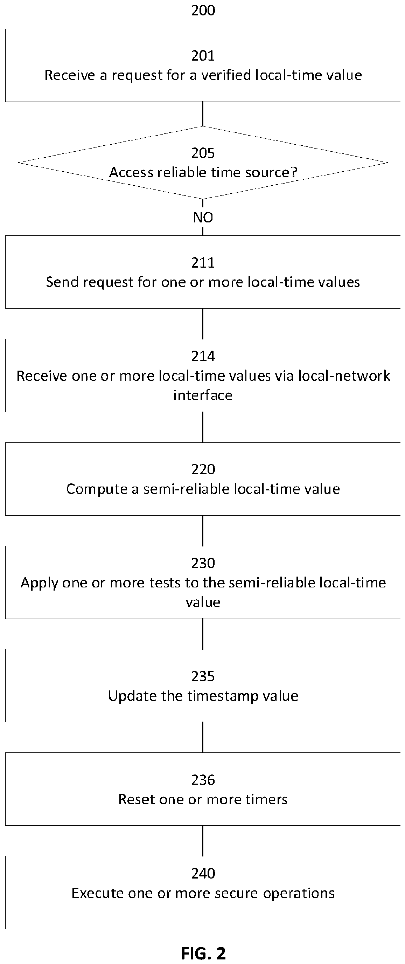

Reference is now made also to FIG. 2, showing a flowchart schematically representing an optional flow of operations 200, according to some embodiments. In such embodiments, in 201 processing unit 111 receives a request for a verified local-time value. Optionally, in 205 processing unit 111 fails to access a reliable time source.

In 214, processing unit 111 optionally receives one or more local-time values from one or more other hardware processors, optionally comprising processing unit 115 and additionally, or alternatively, comprising processing unit 125. Optionally, processing unit 111 receives the one or more local-time values via local-network interface 112. Optionally, other processing unit 115 retrieves the one or more local-time values from local clock 117. Similarly, other processing unit 125 may retrieve the one or more local-time values from local clock 127. Optionally, other processing unit 125 accesses one or more reliable time source 130 to retrieve the one or more local-time values. Similarly, other processing unit 115 may access one or more reliable time source 130 to retrieve the one or more local-time values.

Optionally, processing unit 111 receives the one or more local-time values in response to failing to access the reliable time source in 205. Optionally, in 211, processing unit 111 sends a request for the one or more local-time values to other processing unit 115 and additionally or alternatively to other processing unit 125.

In 220, processing unit 111 optionally computes a semi-reliable local-time value, optionally using the one or more local-time values.

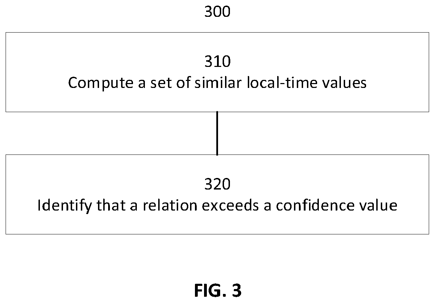

Reference is now made also to FIG. 3, showing a flowchart schematically representing an optional flow of operations 300 for computing a semi-reliable local-time value, according to some embodiments. In such embodiments, in 310 processing unit 111 computes a set of similar local-time values selected from the one or more local-time values. Optionally, the set of similar local-time values are selected such that a difference between each two of the set of similar local-time values is less than a similarity threshold value. Some examples of a similarity threshold value include, but are not limited to, 2 hours, 10 minutes, 20 seconds and 400 milliseconds.

Optionally, in 320, processing unit 111 identifies that a sufficient amount of local-time values of the one or more local-time values are similar. Optionally, in 320 processing unit 111 identifies that a relation between an amount of similar values of the set of similar local-time values and an amount of values in the one or more local-time values exceeds a confidence value, for example more than 90 percent of the one or more local-time values are in the set of similar local-time values.

Reference is now made again to FIG. 2. Optionally, processing unit 111 uses an uptime value when computing the semi-reliable local-time value. Optionally, the uptime value is indicative of an amount of time since an initialization of processing unit 111. The update value may be an amount of clock ticks.

In 230, processing unit 111 optionally applies one or more tests to the semi-reliable local-time value. Optionally, subject to an outcome of applying the one or more tests, in 240 processing unit 111 executes one or more secure operations.

For example, when device 110 is a vehicle, it may be that the one or more secure operations can be executed when a previous ignition of the vehicle was sufficiently recent. A previous ignition is sufficiently recent when a current time is later than a time of the previous ignition by no more than a maximum time between ignitions, for example 24 days or 30 days. In addition, to allow for differences between time sources, a current time may be earlier than the time of the previous ignition by no more than a flexibility coefficient, for example 9 hours or 24 hours. Thus, in this example, applying the one or more tests to the semi-reliable local-time value optionally comprises comparing the semi-reliable local-time value to a sum of a timestamp value, optionally stored in a configuration file of device 110, and the maximum time between ignitions (maximum allowed time), as well as comparing the semi-reliable local-time value to a difference between the timestamp and the flexibility coefficient (minimum allowed time). In this example, the one or more secure operations are executed in 240 subject to the semi-reliable local-time value being between the maximum allowed time and the minimum allowed time.

Optionally, in 235 processing unit 111 updates the timestamp value with the semi-reliable local-time value.

Optionally, the one or more secure operations comprise scheduling downloading a digital file, for example for OTA updating of digital data on device 110. Optionally, the one or more secure operations comprise copying a file from a USB connected memory device. Optionally, the one or more secure operations comprise receiving a file from a USB connected device. Optionally, the one or more secure operations comprise sending a plurality of statistical values to one or more remote hardware processors (not shown in system 100), for example for performing an analysis of the statistical value for a diagnostic operation on device 110. Optionally, executing the one or more secure operations comprises providing the semi-reliable local-time value to the one or more additional hardware processors (not shown in system 100), for example a server of a OTA update procedure. Other examples of a secure operation include, but are not limited to, verifying a signature of a file, for example a file that was received, copied or downloaded, and validating an expiration time of a certificate.

Optionally, in 236, processing unit 111 reset one or more timers thereof. For example, the one or more timers may include one or more persistent timers and additionally or alternatively one or more timers that rely on real world data.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant short-range digital communication networks will be developed and the scope of the term short-range digital communication network is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of embodiments. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of embodiments, which are, for clarity, described in the context of separate embodiments, may also be provided in combination in a single embodiment. Conversely, various features of embodiments, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although embodiments have been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

It is the intent of the applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the present invention. To the extent that section headings are used, they should not be construed as necessarily limiting. In addition, any priority document(s) of this application is/are hereby incorporated herein by reference in its/their entirety.

## Claims

1. A vehicle, comprising:
at least one short-range digital communication network interface (local-network interface) (112); and
at least one hardware processor (111), connected to the local-network interface, and configured for:
in response to a request for a verified local-time value:
subject to failing to access a reliable time source:
receiving at least one local-time value from at least one other hardware processor (115) by using the local-network interface to access the at least one other hardware processor; and
computing a semi-reliable local-time value using the at least one local-time value; and
executing at least one secure operation subject to an outcome of at least one test applied to the semi-reliable local-time value.

2. The vehicle of claim 1, wherein the local-network interface comprises at least one of: a wireless digital communication network interface, a wired local area network interface, a near-field communication (NFC) interface, and a bus of the vehicle.

3. The vehicle of any of the previous claims, wherein the at least one other hardware processor comprises at least one vehicle hardware processor installed in the vehicle and connected to the at least one hardware processor via the local-network interface.

4. The vehicle of any of the previous claims, wherein the at least one hardware processor comprises at least one device hardware processor installed in at least one other device connected to the at least one hardware processor via the local-network interface.

5. The vehicle of claim 4, wherein the at least one other device comprises at least one of:
a mobile device;
a maintenance device, connected to the vehicle for the purpose of performing at least one maintenance operation on the vehicle; and
a road infrastructure component.

6. The vehicle of any of the previous claims, wherein the at least one hardware processor is further configured for sending the at least one other hardware processor a request for the at least one local-time value.

7. The vehicle of any of the previous claims, wherein the at least one other hardware processor retrieves the at least one local-time value from a local clock (117) of the at least one other hardware processor and/or by accessing at least one other reliable time source.

8. The vehicle of any of the previous claims, wherein computing the semi-reliable local-time value comprises:
computing a set of similar local-time values selected from the at least one local-time value, such that a difference between each two of the set of similar local-time values is less than a similarity threshold value; and
identifying that a relation between an amount of similar values of the set of similar local-time values and an amount of values in the at least one local-time value exceeds a confidence value.

9. The vehicle of any of the previous claims, wherein computing the semi-reliable local-time value comprises using an uptime value indicative of an amount of time since an initialization of the at least one hardware processor.

10. The vehicle of any of the previous claims, wherein computing the semi-reliable local-time value comprises accessing a monotonic counter (114) of the vehicle.

11. The vehicle of any of the previous claims, wherein applying the at least one test to the semi-reliable local-time value comprises comparing the semi-reliable local-time value to a timestamp value; wherein the at least one hardware processor is optionally further configured for updating the timestamp value with the semi-reliable local-time value; wherein the at least one hardware processor is optionally further configured for resetting at least one timer of the at least one hardware processor.

12. The vehicle of claim 1, wherein executing the at least one secure operation comprises providing the semi-reliable local-time value to at least one additional hardware processor.

13. The vehicle of any of the previous claims, wherein the at least one secure operation comprises at least one of:
scheduling downloading a digital file;
sending a plurality of statistical values to at least one remote hardware processor;
copying a file from a Universal Serial Bus (USB) connected memory device;
receiving a file from a USB connected device;
verifying a signature of a file; and
validating an expiration time of a certificate.

14. A method for a hardware processor in a vehicle, comprising:
in response to a request for a verified local-time value:
subject to failing to access a reliable time source:
receiving at least one local-time value from at least one other hardware processor by using at least one short-range digital communication network to access the at least one other hardware processor; and
computing a semi-reliable local-time value using the at least one local-time value; and
executing at least one secure operation subject to an outcome of at least one test applied to the semi-reliable local-time value.

15. A software program product for a vehicle, comprising:
a non-transitory computer readable storage medium; and
program instructions for:
in response to a request for a verified local-time value:
subject to failing to access a reliable time source:
receiving at least one local-time value from at least one other hardware processor by using at least one short-range digital communication network to access the at least one other hardware processor; and
computing a semi-reliable local-time value using the at least one local-time value; and
executing at least one secure operation subject to an outcome of at least one test applied to the semi-reliable local-time value;
wherein the program instructions are executed by at least one computerized processor from the non-transitory computer readable storage medium.
